# EUROPEAN PATENT APPLICATION

(11) **EP 3 524 404 A1**
(43) Date of publication of application: **14.08.2019**
(21) Application number: 17858143.5
(22) Date of filing: 08.09.2017
(51) Int. Cl.: B29C 47/92, B29C 47/32, B29C 47/40

(54) **SCREW EXTRUDER**

(30) Priority: 07.10.2016 JP 2016198850
(71) Applicant: Kabushiki Kaisha Kobe Seiko Sho (Kobe Steel, Ltd.), Kobe-shi, Hyogo 651-8585 (JP)
(72) Inventor: FUKUTANI, Kazuhisa, Kobe-shi Hyogo 651-2271 (JP); HIGASHI, Kosuke, Kobe-shi Hyogo 651-2271 (JP)
(74) Representative: TBK
(86) International application number: PCT/JP2017/032495
(87) International publication number: WO 2018/066304

(57) **Abstract**

This screw extruder is provided with a screw and a casing which accommodates the screw, has a material insertion opening provided on the upstream side in the direction of extrusion of a kneaded material, and has a front end opening on the downstream side. A pressure sensor for measuring pressure within the casing is provided between the downstream end of the insertion opening and the front end opening of the casing, and the rotational speed of the screw is controlled according to pressure measured by the pressure sensor.

## Description

### Technical Field

The present invention relates to a screw extruder for extruding a kneaded material.

### Background Art

A process for manufacturing automobile tires uses an extrusion forming machine that is placed below a kneader which kneads rubber as the raw material of the tires. The extrusion forming machine forms the rubber (kneaded material) fed from the kneader into a sheet shape while continuously extruding it. For example, a technique described in Patent Literature 1 or 2 described below is a technique related to the extrusion forming machine of this kind.

A sheet forming apparatus described in Patent Literature 1 has a material supply portion, a material storage portion that temporarily stores an elastic material supplied from the material supply portion, and a material rolling portion that rolls the elastic material stored in the material storage portion. Two screws are disposed in the material supply portion so that the elastic material can be sent to the material rolling portion through the material storage portion by the screws. Two rolls are disposed in the material rolling portion so that the elastic material can be formed into a sheet shape by the rolls.

A roller head extruder described in Patent Literature 2 has an extruder body, and a calender roll device that rolls kneaded rubber extruded from the extruder body into a sheet shape. A buffer lock device is disposed between the extruder body and the calender roll device. A sensing device that senses pressure (head pressure of the extruder body) between the extruder body and the calender roll device is provided inside the buffer lock device. The speed of the calender roll and the rotational speeds of the screws in the extruder body are automatically controlled depending on the head pressure of the extruder body sensed by the sensing device. Patent Literature 2 describes that due to this configuration, troublesome manual control of skillful worker is not necessary, and a rubber sheet having a uniform width can be always obtained continuously.

### Citation List

### Patent Literature

Patent Literature 1: JP-A-2009-12463
Patent Literature 2: JP-B-S55-4575

### Summary of Invention

### Technical Problem

In recent years, there have been increasing demands for fuel-efficient tires. For the rubber as the raw material of fuel-efficient tires, silica is frequently compounded in a high content. There is a problem that it is difficult to form the rubber (kneaded material) having a high content of silica into a sheet shape by the extrusion forming machine. For this reason, it is desired to enhance the dispersion mixing property of the rubber (kneaded material) not only in the kneader of the upstream side process but also in the extrusion forming machine. To enhance the dispersion mixing property of the rubber (kneaded material), (1) it is necessary to apply more energy to the kneaded material in the portion where the screws are disposed to extrude the kneaded material, and (2) it is necessary to stabilize the filling state of the kneaded material in the portion where the screws are disposed to extrude the kneaded material.

However, either Patent Literature 1 or 2 has no suggestion about a technique for enhancing the dispersion mixing property of the kneaded material. In Patent Literature 2, although the speed of the calender roll and the rotational speeds of the screws in the extruder body are controlled depending on the head pressure of the extruder body, this control is not to stabilize the filling state of the kneaded material in the extruder body.

The present invention has been developed in consideration of the aforementioned actual situation. An object of the invention is to solve the problem (2) of the aforementioned problems (1) and (2) for enhancing the dispersion mixing property of the kneaded material, that is, to provide a screw extruder having a configuration in which a filling state of a kneaded material can be stabilized in a portion where a screw is disposed to extrude the kneaded material.

### Solution to Problem

A screw extruder according to the invention is a screw extruder for excluding a kneaded material, including: a screw; and a casing housing the screw and having a material supply port on an upstream side in an extrusion direction of the kneaded material and a tip-side opening on a downstream side in the extrusion direction, wherein a pressure sensor for measuring a pressure inside the casing is provided between a downstream end of the supply port and the tip-side opening of the casing, and wherein a rotational speed of the screw is controlled depending on the pressure measured by the pressure sensor.

With this configuration, the rotational speed of the screw is controlled depending on the pressure measured by the pressure sensor so that the filling state of the kneaded material inside the casing in the portion where the screw is disposed to extrude the kneaded material is stabilized. Accordingly, the kneaded material is kneaded stably by the screw in the portion where the screw is disposed. Thus, the dispersion mixing property of the kneaded material is enhanced.

In addition, in the invention, it is preferable that an inner wall surface of the casing has an outer edge shape in which two circles partially overlap each other on the same plane in a section perpendicular to the extrusion direction of the kneaded material, wherein a pair of left and right screws, as the screw, are housed in the casing, and wherein a pressure inside the casing in a part defined in the section by a virtual line horizontally extending from a top portion at a bottom-side center of the casing and virtual lines respectively extending downward from rotation centers of the pair of left and right screws is measured by the pressure sensor.

The above-described defined part inside the casing is a part where pressure tends to be stabilized, and a part where kneading operation acts on the material (kneaded material) most effectively. When the rotational speeds of the screws are controlled based on the pressure of the part, the filling state of the kneaded material in the casing is made more stable. In addition, since the pressure tends to be stabilized in the part, measuring the pressure in the part is suitable for evaluation of the kneading degree of the material (kneaded material).

Further, in the invention, it is preferable that a plurality of pressure sensors, as the pressure sensor, are provided so as to measure respective pressures in a left chamber of the casing and a right chamber of the casing.

With this configuration, even when there is a difference in filling ratio (pressure) of the kneaded material between the left and right chambers of the casing, suitable control can be made depending on the difference.

Further, in the invention, it is preferable that a plurality of pressure sensors, as the pressure sensor, are provided so as to measure pressures at a plurality of places in the extrusion direction inside the casing.

With this configuration, the pressure of the kneaded material ejected from the casing can be stabilized.

Further, in the invention, it is preferable that a pair of upper and lower rollers for forming the kneaded material into a sheet shape are disposed on a downstream fore side of the casing, wherein load sensors for measuring loads acting on the rollers are provided in the rollers, and wherein rotational speeds of the rollers are controlled depending on a combination of the pressure measured by the pressure sensor and the loads measured by the load sensors.

With this configuration, the pressure of the kneaded material before the rollers can be stabilized. Accordingly it is possible to manufacture a sheet stable in thickness and width.

Further, in the invention, it is preferable that a pair of upper and lower rollers for forming the kneaded material into a sheet shape are disposed on a downstream fore side of the casing, wherein a bank portion pressure sensor for measuring a pressure in a bank portion that is a part between the casing and the rollers is provided in the bank portion, and wherein rotational speeds of the rollers are controlled depending on a combination of the pressure measured by the pressure sensor and the pressure measured by the bank portion pressure sensor.

With this configuration, the pressure of the kneaded material before the rollers can be stabilized. Accordingly it is possible to manufacture a sheet stable in thickness and width.

Further, in the invention, it is preferable that the casing has a tapered shape, wherein the pressure inside the casing on an upstream side from the middle between the downstream end of the supply port and the tip-side opening of the casing is measured by the pressure sensor.

In the screw extruder with the pair of upper and lower rollers for forming the kneaded material into a sheet shape, according to the invention, it is intended to stabilize the filling state of the kneaded material in the casing due to the control of the rotational speed of the screw based on the pressure measured by the pressure sensor. In addition, it is intended to stabilize the thickness and width of the sheet due to the control of the rotational speeds of the rollers based on a combination of the pressure measured by the pressure sensor and the loads measured by the load sensors (or the pressure measured by the bank portion pressure sensor).

Here, when the casing has a tapered shape, the pressure inside the casing has a steeper increasing gradient at a position closer to the tip of the casing. More rotational energy of the screw is consumed at a place where the pressure increase is large. When the pressure sensor is placed at a place where the difference from the pressure at the tip of the casing can be measured easily, it is possible to measure pressure more suitable for the control of the rotational speed of the screw.

From such a point, it is preferable to measure the pressure inside the casing on the upstream side from the middle between the downstream end of the material supply port and the tip-side opening of the casing.

In addition, the pressure inside the casing on the upstream side from the middle between the downstream end of the material supply port and the tip-side opening of the casing is more suitable for the control of the rotational speeds of the rollers because there is a sufficient difference from the pressure in the bank portion (or the loads acting on the rollers).

### Advantageous Effects of Invention

According to the invention, it is possible to provide a screw extruder capable of stabilizing a filling state of a kneaded material in a portion where a screw is disposed to extrude the kneaded material.

### Brief Description of Drawings

FIG. 1 is a cross-sectional view of an extruder with roller-die as a first embodiment of a screw extruder according to the invention.
FIG. 2 is a sectional view taken on II-II in FIG. 1 and a longitudinal sectional view of the extruder with roller-die in the embodiment of the present invention.
FIG. 3 is a schematic sectional view taken on III-III in FIG. 2.
FIG. 4 is a pressure distribution chart in a downstream portion of a casing.
FIG. 5 is a flow chart illustrating a control flow of the rotational speed of a screw and the rotational speeds of rollers in the extruder with roller-die illustrated in FIGs. 1 to 3.
FIG. 6 is a longitudinal sectional view of an extruder with roller-die as a second embodiment of a screw extruder according to the invention.
FIG. 7 is a cross-sectional view of an extruder with roller-die as a third embodiment of a screw extruder according to the invention.
FIG. 8 is a flow chart illustrating a control flow of the rotational speed of a screw and the rotational speeds of rollers in the extruder with roller-die illustrated in FIG. 7.

### Description of Embodiments

Hereinafter, embodiments for carrying out the present invention will be described with reference to the drawings. A screw extruder illustrated in each of the following embodiments is a screw extruder with roller-die (hereinafter, referred to as "extruder with roller-die") for extruding a kneaded material of a polymer such as rubber and forms the extruded material into a sheet shape. The screw extruder according to the invention may be also applied to a machine called a pelletizer, which extrudes a kneaded material of a polymer from a die having a multiplicity of circular holes, and then cuts and forms the extruded material into cylindrical pellets.

### (Configuration of Extruder with Roller-Die)

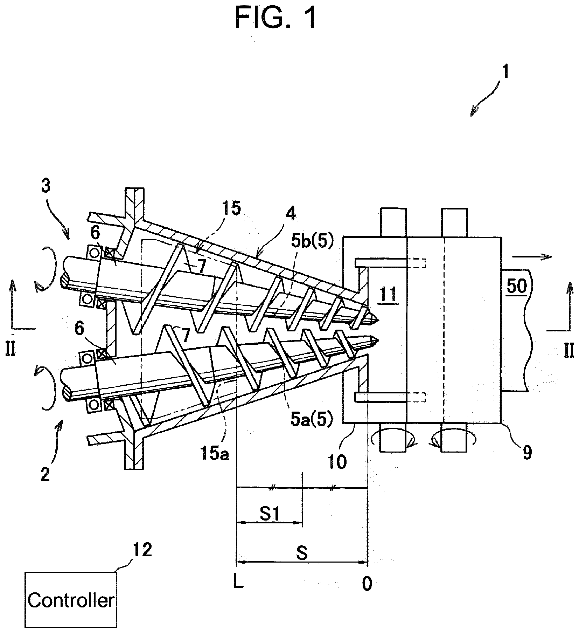

An extruder with roller-die 1 according to a first embodiment of the invention will be described with reference to FIGs. 1 to 3. The extruder with roller-die 1 includes a pair of left and right screws 2 and 3 for extruding a kneaded material, and a casing 4 housing the screws 2 and 3. In front of the casing 4, a pair of upper and lower rollers 9 and 10 are disposed. A part between the casing 4 and the rollers 9 and 10 is called a bank portion 11. The kneaded material extruded by the screws 2 and 3 accumulates in the bank portion 11. The bank portion 11 is closed. The rollers 9 and 10 are coupled so as to rotate in directions opposite to each other. The rollers 9 and 10 are rotated at the same rotational speed (speed of rotation) by a not-illustrated single driving unit. The rollers 9 and 10 are called a roller-die, which rolls the kneaded material and forms it into a sheet shape.

Each of the screws 2 and 3 includes a shaft portion 6 and a helical flight 7 provided on the outer peripheral surface of the shaft portion 6. The screws 2 and 3 are screws having the same shape and the same dimensions except that the torsion angles of the flights are opposite to each other. In addition, the screws 2 and 3 are coupled to rotate in opposite directions to each other. The screws 2 and 3 are rotated at the same rotational speed by a not-illustrated single driving unit.

The casing 4 has a shape tapered from the upstream side toward the downstream side in the extrusion direction of the kneaded material. The casing 4 includes a casing upstream portion 14 in which a material (kneaded material) supply port 15 is provided at the top thereof, and a casing downstream portion 24 which is circumferentially surrounded by a wall surface. The kneaded material such as rubber supplied to the supply port 15 from above is extruded to the bank portion 11 by the screws 2 and 3 rotating in opposite directions to each other, and then passed between the rollers 9 and 10. Thus, the kneaded material is formed into a sheet shape.

### <Pressure Sensors>

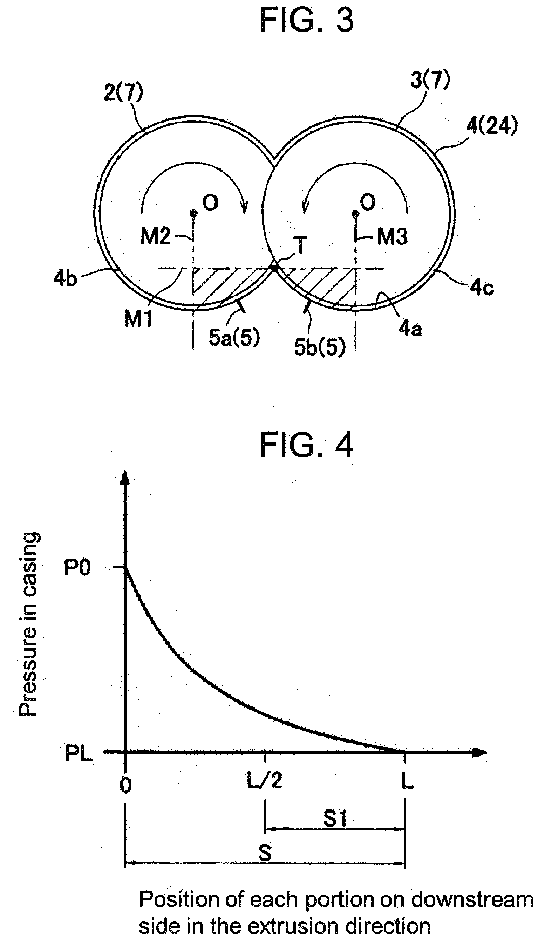

As illustrated in FIG. 3, the inner wall surface of the casing 4 has an outer edge shape (spectacles-like shape) in which two circles partially overlap each other on the same plane in a section perpendicular to the extrusion direction of the kneaded material. The screw 2 is housed in a left chamber 4b of the casing 4, and the screw 3 is housed in a right chamber 4c of the casing 4. Two pressure sensors 5 (5a and 5b) are attached to a bottom portion of the casing 4. The pressure sensor 5a is attached on the left chamber 4b side, and the pressure sensor 5b is attached on the right chamber 4c side. Pressure (pressure of the kneaded material) inside the casing 4 is measured by each of the pressure sensors 5 (5a and 5b). Since the pressures in the left and right chambers of the casing 4 are measured individually, even when there is a difference in filling ratio (pressure) of the kneaded material between the left and right chambers of the casing 4, control can be carried out suitably depending on the difference as will be described later.

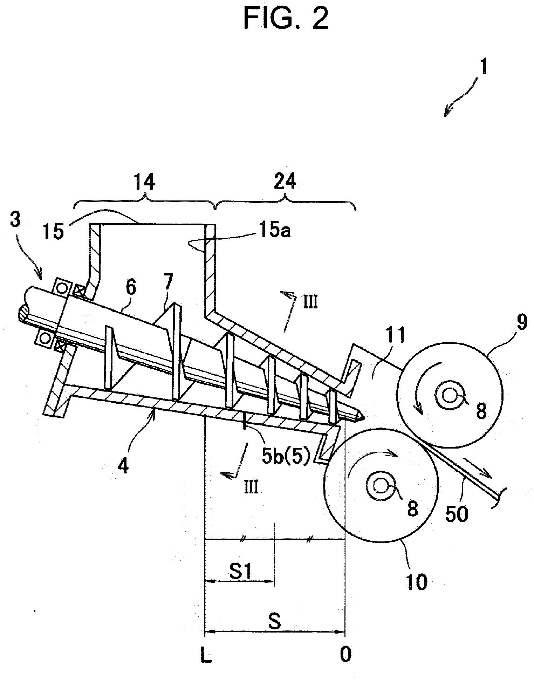

As illustrated in FIGs. 1 and 2, the pressure sensors 5 (5a and 5b) are attached to a bottom portion of the casing 4 in a space S between a downstream end 15a of the supply port 15 and a tip-side opening of the casing 4 in the extrusion direction of the kneaded material. In other words, the pressure sensors 5 (5a and 5b) are attached to a bottom portion of a downstream part of the casing 4, that is, the casing downstream portion 24 circumferentially surrounded by a wall surface. More preferably, as in the embodiment, the pressure sensors 5 (5a and 5b) are attached to the bottom portion of the casing 4 in the space S between the downstream end 15a of the supply port 15 and the tip-side opening of the casing 4 and in a part of an upstream region S1 on the upstream side from the middle of the space S.

As illustrated in FIG. 3, the pressure sensors 5 (5a and 5b) are attached to, of the bottom portion of the casing 4, a part close to the casing center, so as to measure pressure inside the casing 4 at a part defined by a virtual line M1 horizontally extending from a top portion T of the bottom-side center of the casing 4 and virtual lines M2 and M3 respectively extending downward from rotation centers O of the screws 2 and 3 in a sectional view of the casing 4 perpendicular to the extrusion direction of the kneaded material. The defined part inside the casing 4 is a part where pressure tends to be stabilized and a part where kneading operation acts on the material (kneaded material) most effectively. When the rotational speeds (speeds of rotation) of the screws 2 and 3 are controlled based on the pressure in the part, the filling state of the kneaded material in the casing 4 is made more stable. In addition, since the pressure tends to be stabilized in the part, the measurement of pressure in the part is suitable for evaluation of the kneading degree of the material (kneaded material). The pressure sensors 5 (5a and 5b) are attached to the casing 4 so as to prevent the tip portions (pressure detection portions) thereof from protruding from a bottom-side inner wall surface 4a of the casing 4, so that the pressure sensors 5 (5a and 5b) can be prevented from touching the flights 7 of the rotating screws 2 and 3.

### <Load Sensors>

As illustrated in FIG. 2, load sensors 8 are respectively attached to the shaft portions of the rollers 9 and 10 disposed in front of the casing 4, that is, on the downstream fore side of the casing 4. Each load sensor 8 is, for example, constituted by a strain gauge. The load sensors 8 are sensors for measuring respective loads of the kneaded material extruded from the bank portion 11 acting on the rollers 9 and 10.

FIG. 4 is a pressure distribution chart in the casing downstream portion 24 when the extruder is in use. "O", "L", "S" and "S1" in FIG. 4 correspond to "O", "L", "S" and "S1" in FIGs. 1 and 2. When the casing 4 has a tapered shape, the volume decreases as goes toward the tip of the casing 4. Therefore, the kneaded material extruded by the screws 2 and 3 is consolidated more as approaches the tip of the casing 4. Thus, the pressure (pressure of the kneaded material) inside the casing 4 has a steeper increasing gradient at a place closer to the tip of the casing 4. "PL" designates the atmospheric pressure, and "PO" designates the pressure (pressure of the kneaded material) at the tip-side opening of the casing 4 where the sectional area is the smallest.

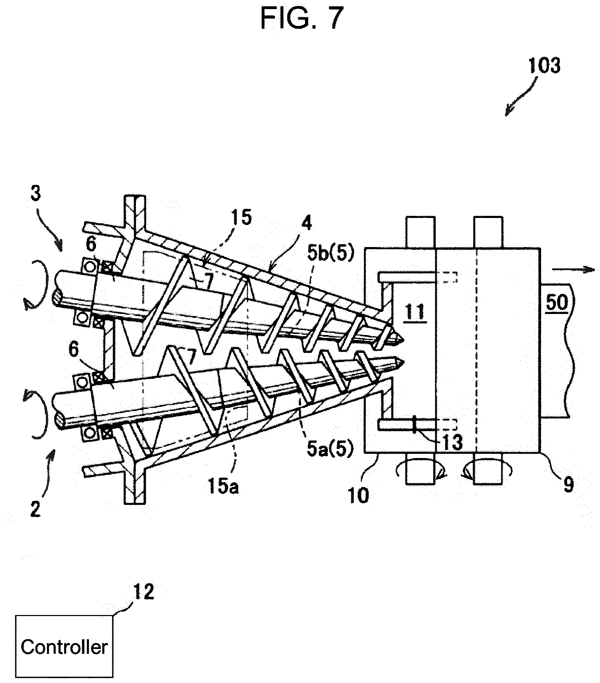

More rotational energy of the screws 2 and 3 is consumed at a place where pressure increase (pressure) is large. Accordingly, when the pressure sensors 5 are placed at places where the difference from the pressure at the tip of the casing 4 can be measured easily, it is possible to measure pressure more suitable for the control of the rotational speeds of the screws 2 and 3. From this point, it is preferable to measure the pressure inside the casing 4 on the upstream side from the middle (L/2) of the space S between the downstream end 15a of the supply port 15 and the tip-side opening of the casing 4. In addition, the pressure inside the casing 4 in the part of the region S1 on the upstream side from the middle between the downstream end 15a of the supply port 15 and the tip-side opening of the casing 4 has a sufficient difference from each of the loads acting on the rollers 9 and 10 measured by the load sensors 8 (or pressure in the bank portion 11 in an embodiment illustrated in FIG. 7), and therefore is suitable for the control of the rotational speeds of the rollers 9 and 10.

### (Control Method)

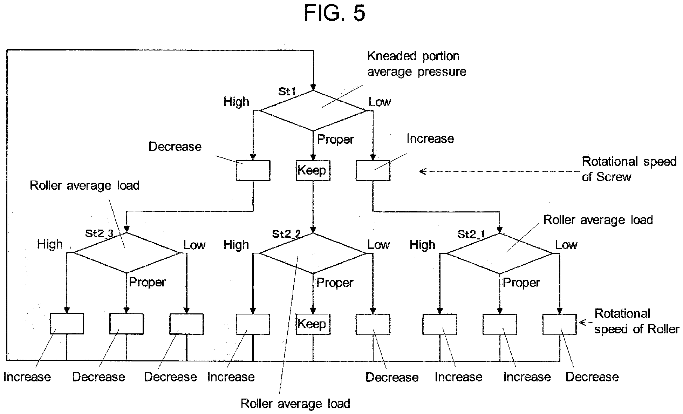

The method for controlling the rotational speeds of screws and the rotational speeds of rollers in the extruder with roller-die 1 will be described with reference to FIG. 5. The control is performed by a controller 12 (see FIG. 1) serving as a control unit. Signals from the pressure sensors 5 (5a and 5b) and signals from the load sensors 8 are imported to the controller 12. The controller 12 controls the rotational speeds of the screws 2 and 3 and the rotational speeds of the rollers 9 and 10 based on the imported signals.

The controller 12 calculates average pressure (kneaded portion average pressure) of the pressure (kneaded portion pressure) measured by the pressure sensor 5a and the pressure (kneaded portion pressure) measured by the pressure sensor 5b. In addition, the controller 12 calculates an average load (roller average load) of the loads (roller loads) measured by the two load sensors 8. When the extruder with roller-die 1 is engaging in extrusion of the kneaded material, the signals from the respective sensors 5a, 5b and 8 are always sent to the controller 12. The signals from the respective sensors 5a, 5b and 8 may be sent to the controller 12 at fixed intervals or the like.

### <Control of Rotational speed of Screw)

Based on the value of the aforementioned kneaded portion average pressure, the controller 12 controls the rotational speeds of the screws 2 and 3 as follows.

The controller 12 performs control to increase the rotational speeds of the screws 2 and 3 when the kneaded portion average pressure is lower than a predetermined (allowable) pressure range, and to decrease the rotational speeds of the screws 2 and 3 when the kneaded portion average pressure is higher than the predetermined (allowable) pressure range. In addition, when the kneaded portion average pressure is within the predetermined (allowable) pressure range, that is, proper (within the proper range), the controller 12 performs control to keep the rotational speeds of the screws 2 and 3 as they are (Step 1 (St1)).

The fact that the kneaded portion average pressure is low means that the filling state of the kneaded material in the casing 4 (casing downstream portion 24) is low. Therefore, when the rotational speeds of the screws 2 and 3 are increased, the filling state of the kneaded material is increased. On the contrary, the fact that the kneaded portion average pressure is high means that the filling state of the kneaded material in the casing 4 (casing downstream portion 24) is high (too high). Therefore, when the rotational speeds of the screws 2 and 3 are decreased, the filling state of the kneaded material is decreased.

Due to the aforementioned control, the filling state of the kneaded material in the casing 4 (casing downstream portion 24) is stabilized. As a result, the kneaded material is kneaded stably in the casing 4 (casing downstream portion 24) by the screws 2 and 3, so that the dispersion mixing property of the kneaded material can be enhanced.

### <Control of Rotational speed of Roller>

The controller 12 controls the rotational speeds of the rollers 9 and 10 based on a combination of the value of the kneaded portion average pressure and the value of the roller average load, as follows.
(1) When the kneaded portion average pressure is lower than the predetermined (allowable) pressure range, the rotational speeds of rollers are controlled as follows. The controller 12 performs control to decrease the rotational speeds of the rollers 9 and 10 when the roller average load is lower than a predetermined (allowable) load range, and to increase the rotational speeds of the rollers 9 and 10 when the roller average load is higher than the predetermined (allowable) load range. In addition, when the roller average load is within the predetermined (allowable) load range, that is, proper (within the proper range), the controller 12 performs control to increase the rotational speeds of the rollers 9 and 10 (Step 2_1 (St2_1)).
(2) When the kneaded portion average pressure is higher than the predetermined (allowable) pressure range, the rotational speeds of rollers are controlled as follows. The controller 12 performs control to decrease the rotational speeds of the rollers 9 and 10 when the roller average load is lower than the predetermined (allowable) load range, and to increase the rotational speeds of the rollers 9 and 10 when the roller average load is higher than the predetermined (allowable) load range. In addition, when the roller average load is within the predetermined (allowable) load range, that is, proper (within the proper range), the controller 12 performs control to decrease the rotational speeds of the rollers 9 and 10 (Step 2_3 (St2_3)).
(3) When the kneaded portion average pressure is within the predetermined (allowable) pressure range, the rotational speeds of rollers are controlled as follows. The controller 12 performs control to decrease the rotational speeds of the rollers 9 and 10 when the roller average load is lower than the predetermined (allowable) load range, and to increase the rotational speeds of the rollers 9 and 10 when the roller average load is higher than the predetermined (allowable) load range. In addition, when the roller average load is within the predetermined (allowable) load range, that is, proper (within the proper range), the controller 12 performs control to keep the rotational speeds of the rollers 9 and 10 as they are (Step 2_2 (St2_2)).

The aforementioned controls (1) to (3) can be described in another expression as follows. Independently of the value of the kneaded portion average pressure, the controller 12 performs control to decrease the rotational speeds of the rollers 9 and 10 when the roller average load is lower than the predetermined (allowable) load range, and to increase the rotational speed of the rollers 9 and 10 when the roller average load is higher than the predetermined (allowable) load range.

On the other hand, when the roller average load is within the predetermined (allowable) load range, that is, proper (within the proper range), the controller 12 performs control to increase, decrease or keep the rotational speeds of the rollers 9 and 10 depending on the fact that the controller 12 increases, decreases or keeps the rotational speeds of the screws 2 and 3. More specifically, the controller 12 performs control to increase the rotational speeds of the rollers 9 and 10 when increasing the rotational speeds of the screws 2 and 3, to decrease the rotational speeds of the rollers 9 and 10 when decreasing the rotational speeds of the screws 2 and 3, and to keep the rotational speeds of the rollers 9 and 10 as they are when keeping the rotational speeds of the screws 2 and 3 as they are.

When the rotational speeds of the rollers are controlled in the aforementioned manner, the pressure of the kneaded material on the upstream side from the rollers, that is, in the bank portion 11 is stabilized. Thus, the fluctuation of the volume of the kneaded material caught between the rollers 9 and 10 is reduced so that the kneading degree of the kneaded material in the casing 4 can be improved, and a sheet 50 stable in thickness and width can be manufactured.

The aforementioned control of the rotational speeds of the screws and the rotational speeds of the rollers can be summarized as in Table 1.

**Table 1**

| | Roller average load Low | Roller average load Proper range | Roller average load High |
|---|---|---|---|
| Kneaded portion average pressure | Rotational speed of screw: increase | Rotational speed of screw: increase | Rotational speed of screw: increase |
| Low | Rotational speed of roller: decrease | Rotational speed of roller: increase | Rotational speed of roller: increase |
| Kneaded portion average pressure | Rotational speed of screw: keep | Rotational speed of screw: keep | Rotational speed of screw: keep |
| Proper range | Rotational speed of roller: decrease | Rotational speed of roller: keep | Rotational speed of roller: increase |
| Kneaded portion average pressure | Rotational speed of screw: decrease | Rotational speed of screw: decrease | Rotational speed of screw: decrease |
| High | Rotational speed of roller: decrease | Rotational speed of roller: decrease | Rotational speed of roller: increase |

### (Second Embodiment)

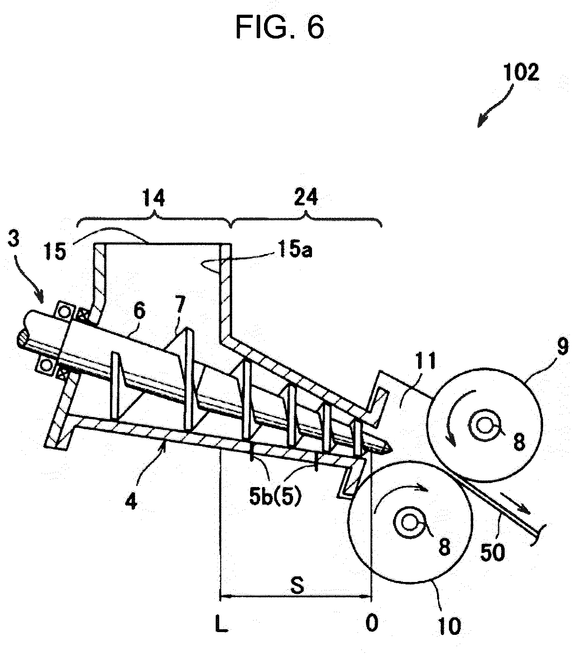

FIG. 6 is a view of an extruder with roller-die 102 according to a second embodiment of the invention. As for the extruder with roller-die 102 according to the second embodiment, members which are the same as the members constituting the extruder with roller-die 1 according to the first embodiment are referenced correspondingly (the same thing can be applied to a third embodiment which will be described later).

The extruder with roller-die 102 according to the second embodiment is different from the extruder with roller-die 1 according to the first embodiment at the point of the number of pressure sensors 5 attached to the bottom portion of the casing 4 (casing downstream portion 24). In the extruder with roller-die 1 according to the first embodiment, one pressure sensor 5 is disposed (one for each of the left chamber 4b and the right chamber 4c) in the extrusion direction of the kneaded material. On the other hand, in the extruder with roller-die 102 according to the second embodiment, two pressure sensors 5 are disposed (two for each of the left chamber 4b and the right chamber 4c) in the extrusion direction of the kneaded material.

Specifically, in the extruder with roller-die 102, two pressure sensors 5 are attached to the bottom portion of the casing 4 in the space S between the downstream end 15a of the supply port 15 and the tip-side opening of the casing 4 for each of the left chamber 4b and the right chamber 4c in the extrusion direction of the kneaded material at predetermined axial interval. The two pressure sensors 5b disposed in the right chambers 4c are illustrated in FIG. 6. In this manner, according to this embodiment, a plurality of pressure sensors 5 are provided so that pressure can be measured at a plurality of places in the extrusion direction inside the casing 4. Due to the configuration, the pressure of the kneaded material ejected from the casing 4 can be stabilized. Thus, the fluctuation of the volume of the kneaded material caught between the rollers 9 and 10 can be reduced so that the kneading degree of the kneaded material in the casing 4 can be improved, and a sheet 50 stable in thickness and width can be manufactured.

A total of four pressure sensors 5 are attached to the bottom portion of the casing 4 in the extruder with roller-die 102. As described above, the screws 2 and 3 of this embodiment are coupled and rotated at the same rotational speed. Therefore, when pressures measured by the four pressure sensors 5 are used to control the rotational speeds of the screws and the rotational speeds of the rollers, an average value of the pressures measured by the four pressure sensors 5 is used to control the rotational speeds of the screws and the rotational speeds of the rollers.

### (Third Embodiment)

FIG. 7 is a view of an extruder with roller-die 103 according to a third embodiment of the invention. In the extruder with roller-die 1 according to the first embodiment, the load sensors 8 are attached to the shaft portions of the rollers 9 and 10. In the extruder with roller-die 103 according to the third embodiment, a bank portion pressure sensor 13 for measuring pressure in the bank portion 11 (pressure of the kneaded material in the back portion 11) is provided between the casing 4 and the rollers 9 and 10 in place of the load sensors 8.

In the same manner as in the first embodiment, the controller 12 calculates average pressure (kneaded portion average pressure) of the pressure (kneaded portion pressure) measured by the pressure sensor 5a and the pressure (kneaded portion pressure) measured by the pressure sensor 5b.

In this embodiment, the controller 12 controls the rotational speeds of the rollers 9 and 10 based on a combination of the value of the kneaded portion average pressure and the value of the bank portion pressure measured by the bank portion pressure sensor 13.

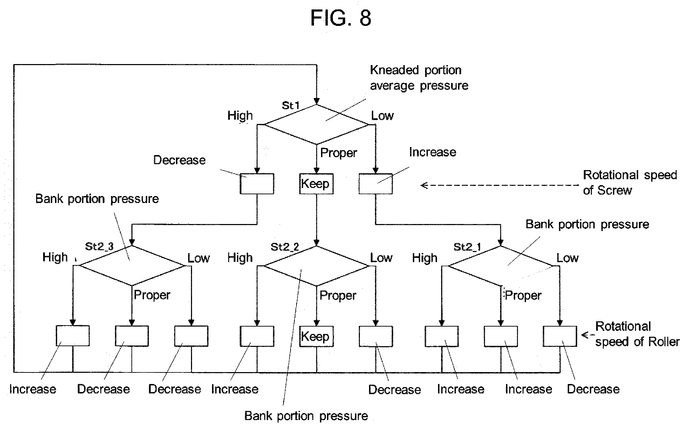

FIG. 8 is a flow chart illustrating a control flow of the rotational speeds of the screws and the rotational speeds of the rollers in this embodiment. The rotational speeds of the screws 2 and 3 in this embodiment are controlled in the same manner as in the first embodiment. As for specific examples of the control of the rotational speeds of the rollers 9 and 10, that is, as for specific examples of the control of the rotational speeds of the rollers, the "roller average load" in the description of "Control of Rotational speed of Roller " in the first embodiment is replaced by "bank portion pressure", and the "load" in the description about the roller average load is replaced by "pressure", with reference to FIG. 8. The control of the rotational speeds of the screws and the rotational speeds of the rollers can be summarized as in Table 2.

**Table 2**

| | Bank portion pressure | Bank portion pressure | Bank portion pressure |
|---|---|---|---|
| | Low | Proper range | High |
| Kneaded portion average pressure | Rotational speed of screw: increase | Rotational speed of screw: increase | Rotational speed of screw: increase |
| Low | Rotational speed of roller: decrease | Rotational speed of roller: increase | Rotational speed of roller: increase |
| Kneaded portion average pressure | Rotational speed of screw: keep | Rotational speed of screw: keep | Rotational speed of screw: keep |
| Proper range | Rotational speed of roller: decrease | Rotational speed of roller: keep | Rotational speed of roller: increase |
| Kneaded portion average pressure | Rotational speed of screw: decrease | Rotational speed of screw: decrease | Rotational speed of screw: decrease |
| High | Rotational speed of roller: decrease | Rotational speed of roller: decrease | Rotational speed of roller: increase |

Due to the aforementioned control about the rotational speeds of the rollers, the pressure of the kneaded material on the downstream fore side of the rollers, that is, in the bank portion 11 is stabilized in the same manner as in the first embodiment. Thus, the fluctuation of the volume of the kneaded material caught between the rollers 9 and 10 is reduced so that the kneading degree of the kneaded material in the casing 4 can be improved and a sheet 50 stable in thickness and width can be manufactured.

### (Modifications)

The pair of left and right screws 2 and 3 in each aforementioned embodiment are designed to be rotated at the same rotational speed by a single driving unit. The screws 2 and 3 may be instead designed to be rotated independently of each other by two driving units respectively. In this case, when the pressure sensors 5 are provided in the left and right chambers of the casing 4 respectively as in the aforementioned first embodiment, the rotational speeds of the left and right screws 2 and 3 are, for example, controlled individually by the pressure sensors 5 disposed in the chambers respectively in accordance with the control flow illustrated in FIG. 5. As for the control of the rotational speeds of the rollers 9 and 10, for example, average pressure of the pressures measured by the pressure sensors 5 provided in the left and right chambers of the casing 4 is used for the control of the rotational speeds of the rollers 9 and 10.

Each pressure sensor 5 for measuring pressure inside the casing 4 (casing downstream portion 24) may be attached not to the bottom portion of the casing 4 (casing downstream portion 24) but to a side portion or a top portion of the casing 4 (casing downstream portion 24).

Two or more pressure sensors may be provided in each of the left and right chambers of the casing 4.

Three or more pressure sensors may be attached to the casing 4 (casing downstream portion 24) in the extrusion direction of the kneaded material (in the axial direction of each screw).

The screw extruder may be a screw extruder including not the pair of left and right screws 2 and 3 but only one screw.

In addition, various modifications may be made within the scope that one of ordinary skill in the art can arrive at.

The present application is based on Japanese Patent Application No. 2016-198850 filed on October 7, 2016, the contents of which are incorporated herein by reference.

### Reference Signs List

1: Extruder with roller-die (screw extruder)
2, 3: Screw
4: Casing
T: Top portion
M1, M2, M3: Virtual line
O: Rotation center
5: Pressure sensor
8: Load
9, 10: Roller
12: Controller
13: Bank portion pressure sensor
15: Supply port
15a: Downstream end

## Claims

1. A screw extruder for extruding a kneaded material, comprising:
a screw; and
a casing housing the screw and having a material supply port on an upstream side in an extrusion direction of the kneaded material and a tip-side opening on a downstream side in the extrusion direction,
wherein a pressure sensor for measuring a pressure inside the casing is provided between a downstream end of the supply port and the tip-side opening of the casing, and
wherein a rotational speed of the screw is controlled depending on the pressure measured by the pressure sensor.

2. The screw extruder according to Claim 1,
wherein an inner wall surface of the casing has an outer edge shape in which two circles partially overlap each other on the same plane in a section perpendicular to the extrusion direction of the kneaded material,
wherein a pair of left and right screws, as the screw, are housed in the casing, and
wherein a pressure inside the casing in a part defined in the section by a virtual line horizontally extending from a top portion at a bottom-side center of the casing and virtual lines respectively extending downward from rotation centers of the pair of left and right screws is measured by the pressure sensor.

3. The screw extruder according to Claim 2,
wherein a plurality of pressure sensors, as the pressure sensor, are provided so as to measure respective pressures in a left chamber of the casing and a right chamber of the casing.

4. The screw extruder according to Claim 1,
wherein a plurality of pressure sensors, as the pressure sensor, are provided so as to measure pressures at a plurality of places in the extrusion direction inside the casing.

5. The screw extruder according to Claim 2,
wherein a plurality of pressure sensors, as the pressure sensor, are provided so as to measure pressures at a plurality of places in the extrusion direction inside the casing.

6. The screw extruder according to Claim 3,
wherein a plurality of pressure sensors, as the pressure sensor, are provided so as to measure pressures at a plurality of places in the extrusion direction inside the casing.

7. The screw extruder according to any one of Claims 1 to 6,
wherein a pair of upper and lower rollers for forming the kneaded material into a sheet shape are disposed on a downstream fore side of the casing,
wherein load sensors for measuring loads acting on the rollers are provided in the rollers, and
wherein rotational speeds of the rollers are controlled depending on a combination of the pressure measured by the pressure sensor and the loads measured by the load sensors.

8. The screw extruder according to Claim 7,
wherein the casing has a tapered shape, and
wherein the pressure inside the casing on an upstream side from the middle between the downstream end of the supply port and the tip-side opening of the casing is measured by the pressure sensor.

9. The screw extruder according to any one of Claims 1 to 6,
wherein a pair of upper and lower rollers for forming the kneaded material into a sheet shape are disposed on a downstream fore side of the casing,
wherein a bank portion pressure sensor for measuring a pressure in a bank portion that is a part between the casing and the rollers is provided in the bank portion, and
wherein rotational speeds of the rollers are controlled depending on a combination of the pressure measured by the pressure sensor and the pressure measured by the bank portion pressure sensor.

10. The screw extruder according to Claim 9,
wherein the casing has a tapered shape, and
wherein the pressure inside the casing on an upstream side from the middle between the downstream end of the supply port and the tip-side opening of the casing is measured by the pressure sensor.
